# FASCICULE DE BREVET EUROPEEN

(11) **EP 3 926 529 B1**
(45) Date de publication et mention de la délivrance du brevet: **27.03.2024**
(21) Numéro de dépôt: 21179118.1
(22) Date de dépôt: 11.06.2021
(51) Int. Cl.: G06V 10/40

(54) **SYSTÈMES ET MÉTHODES DE DÉTERMINATION D'UN NOMBRE DE PERSONNES DANS UN VÉHICULE**
SYSTEME UND METHODEN ZUR BESTIMMUNG EINER ANZAHL VON PERSONEN IN EINEM FAHRZEUG
SYSTEMS AND METHODS FOR DETERMINING A NUMBER OF PERSONS IN A VEHICLE

(30) Priorité: 15.06.2020 FR 2006225
(43) Date de publication de la demande: 22.12.2021
(73) Titulaire: Fareco, 92230 Gennevilliers (FR)
(72) Inventeur: RUNGASAMY, Koumara, 78700 Conflans Sainte Honorine (FR); BLANCHARD, Nicolas, 95330 Domont (FR); XU, Sisong, 92270 Bois Colombes (FR)
(74) Mandataire: Osha BWB

(56) Documents cités:
- EP-A1- 3 654 276
- US-A1- 2013 278 768

## Description

### Domaine technique de l'invention

L'invention concerne des systèmes et méthodes de détermination d'un nombre de personnes dans un véhicule, et notamment dans un véhicule en déplacement.

### Etat de la technique

La croissance continue du trafic automobile a induit une dégradation de la qualité de l'air, des nuisances sonores, un gaspillage énergétique et une augmentation des émissions de gaz à effet de serre. Dans un contexte de transition énergétique il est souhaitable de réduire ces impacts en agissant sur l'ensemble des déplacements et en particulier les déplacements contraints, tels que les déplacements du quotidien.

La pratique du covoiturage est une des réponses, à court et moyen termes, pour réduire la congestion du trafic aux abords des grandes villes. Les premiers services de covoiturage organisés ont été lancés dans les années 1980 par le milieu associatif. Depuis, la pratique n'a cessé de s'améliorer, mais la mobilité urbaine nécessite l'adoption généralisée de ruptures d'usage qui prend également beaucoup de temps pour entrer dans les moeurs. Il est dès lors primordial de développer, adapter et optimiser les infrastructures existantes pour permettre de développer la pratique du covoiturage.

Le covoiturage est de nature très différente selon la typologie des déplacements. Il y a des déplacements professionnels, des déplacements domicile-travail, les autres déplacements du quotidien et, enfin, les déplacements sur de grandes distances. Dans le cadre notamment des déplacements domicile-travail dont le volume s'est amplifié du fait de la périurbanisation, il est recommandé d'adapter des voies dédiées au covoiturage. Cependant, les voies dédiées au covoiturage ne peuvent être réservées que pendant un temps bien déterminé, par exemple en début de matinée et en fin d'après-midi. La voie réservée au covoiturage incitera les usagers de la route à la pratique du partage du trajet.

En parallèle du contrôle de l'accès des véhicules aux voies de covoiturage, l'accès aux parcs de stationnement évolue également pour appliquer des règles différentes selon que le véhicule soit en covoiturage ou non.

Il y a donc un besoin notamment pour détecter et identifier les véhicules qui sont autorisés par exemple à entrer dans un parc de stationnement ou à circuler sur une voie réservée au covoiturage pendant les périodes à fort trafic routier. Pour cela, on cherche à déterminer le nombre de passagers dans un véhicule, qu'il soit à l'arrêt ou en déplacement.

Il est connu de la demande de brevet US 2015/0278617 [Réf. 1] un dispositif pour déterminer le nombre de passagers d'un véhicule et en particulier ceux situés sur la banquette arrière. Le dispositif connu comprend un moyen imageur pour obtenir une image du véhicule et des moyens de détection du nombre de passagers dans le véhicule sur la base de l'image obtenue.

La demande de brevet WO 2008/099146 [Réf. 2] décrit également un dispositif pour déterminer le nombre de passagers d'un véhicule. Le dispositif connu comprend deux moyens d'illumination qui émettent des infra-rouges dans deux gammes spectrales différentes et deux moyens imageurs fournissant deux images d'une même partie du véhicule. Un processeur détermine le nombre de passagers sur la base de la différence de contraste entre les images acquises dans les deux bandes spectrales. La demande de brevet US 2008/0175438 [Réf. 3] décrit un dispositif de contrôle d'un véhicule dans une voie de covoiturage comprenant notamment une caméra et un ensemble de filtres polarisés pouvant être positionnés devant la caméra. Un dispositif de détermination de la position du soleil connecté à un dispositif de contrôle des filtres polarisés permet de déterminer en fonction du jour et de l'heure le meilleur filtre à utiliser pour s'affranchir de réflexions parasites. Un processeur permet de déterminer sur la base de l'image issue de la caméra le nombre de passagers.

La demande de brevet EP3654276 [Réf. 4] décrit également un appareil pour déterminer le nombre d'occupants d'un véhicule. Dans l'appareil décrit, une première et une deuxième caméra générèrent respectivement une première image et une deuxième image du véhicule et un premier module de détection et un deuxième module de détection déterminent respectivement le nombre d'occupants dans la première image et le nombre d'occupants dans la deuxième image. Une unité de décision détermine ensuite le nombre d'occupants dans le véhicule, en choisissant par exemple le plus grand nombre d'occupants détectés entre le nombre d'occupants détectés dans la première image et dans la deuxième image, si une condition prédéterminée est remplie, à savoir une relation prédéterminée entre le moment où la première image est prise et le moment où la deuxième image est prise.

La demande de brevet US2013/0278768A concerne un système de détection d'occupation de véhicule comprenant: au moins un scanner d'identification de véhicule pour déterminer l'identification d'un véhicule; au moins une unité d'imagerie pour capturer des données d'image utilisées pour déterminer si un passager est présent dans le véhicule; et une unité centrale de traitement en communication avec ledit scanner d'identification de véhicule et ladite unité d'imagerie; où ledit scanner d'identification de véhicule est adapté pour transmettre des informations relatives à un véhicule scanné à l'unité centrale de traitement; où l'unité centrale de traitement est configurée pour: comparer les informations reçues du scanner d'identification de véhicule à une liste de véhicules pré-approuvés et empêcher le fonctionnement de l'unité d'imagerie si une correspondance est trouvée et, en l'absence de correspondance, activer le déclenchement de l'unité d'imagerie pour capturer des données d'image concernant les zones passagers du véhicule afin de déterminer si un passager est présent dans le véhicule.

Bien que les dispositifs décrits ci-avant visent à déterminer un nombre de passager dans un véhicule, un niveau accru de performance est toujours souhaité. Notamment, on recherche un haut niveau de confiance dans la détection du nombre de personnes, y compris dans des conditions dégradées comme par exemple et de façon non limitative, un véhicule en mouvement à une vitesse parfois élevée (supérieure à 100 km/h), une détection de nuit, dans des conditions météorologiques défavorables ou pour des véhicules avec des vitres teintées et/ou opaques.

Un objectif de la présente description est de proposer un nouveau système et une nouvelle méthode permettant la détermination du nombre de passagers dans un véhicule à l'arrêt ou en mouvement avec un très haut niveau de confiance, y compris dans des conditions dégradées.

### Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un système de détermination du nombre de personnes dans un véhicule, selon la revendication 1.

La déposante a montré qu'un tel système permettait de déterminer le nombre de personnes dans un véhicule avec une excellente fiabilité. Cette fiabilité est basée sur la recherche de similarités entre les personnes détectées dans chaque image d'au moins un ensemble d'images acquises avec différents champs de vue. Les différents champs de vue permettent notamment d'éviter de manquer la détection d'une personne qui ne serait pas visible sur une image et la détermination des similarités permet de s'assurer lesquelles des personnes détectées ne doivent pas être comptées deux fois.

Un détecteur optique au sens de la présente description comprend généralement une surface de détection optique et un objectif comprenant un ou une pluralité d'éléments optiques configurée pour former une image d'une scène sur la surface de détection optique. Chaque détecteur optique comprend un axe optique défini par ledit objectif.

Le champ de vue d'un détecteur optique est la portion de l'espace que va pouvoir capter la surface de détection optique. Le champ de vue est par exemple un champ de vue angulaire, défini par l'axe optique et un angle de champ. L'angle de champ est calculé à partir de la distance focale de l'objectif et de la taille de la surface de détection.

Selon un ou plusieurs exemples de réalisations, les champs de vue desdits au moins un premier détecteur et au moins un deuxième détecteur se recouvrent partiellement, c'est-à-dire qu'il existe une portion de l'espace qui peut être captée à la fois par ledit au moins un premier détecteur et ledit au moins un deuxième détecteurs. Par exemple, les axes optiques desdits au moins un premier détecteur et au moins un deuxième détecteur sont sécants.

Par détermination d'une similarité d'une personne détectée dans plusieurs images d'un ensemble d'images, on comprend au sens de la présente description, le fait de chercher à savoir si une personne détectée dans une première image et une personne détectée dans une deuxième images correspondent à la même personne dans le véhicule.

Selon un ou plusieurs exemples de réalisation, ledit au moins un premier ensemble d'images comprend deux images acquises par deux détecteurs optiques configurés pour l'acquisition d'images du véhicule avec des champs de vue différents.

Dans d'autres exemples de réalisation, ledit au moins un premier ensemble d'images peut comprendre plus de deux images, par exemple entre 3 et 5 images, acquises par autant de détecteurs optiques configurés pour l'acquisition d'images du véhicule avec des champs de vue différents.

Selon un ou plusieurs exemples de réalisation :
- ledit module de détection est configuré pour déclencher l'acquisition d'une pluralité de premières images par ledit premier détecteur optique et d'une pluralité de deuxièmes images par ledit deuxième détecteur optique lorsque le véhicule pénètre dans la zone de contrôle prédéterminée, résultant en une pluralité d'ensembles d'images acquises avec différents champs de vue ;
- ladite unité de traitement est configurée pour :
   - détecter dans chaque image de chaque ensemble d'image, une ou plusieurs personnes et de coordonnées dans l'image de la ou desdites personnes ;
   - déterminer, pour chaque ensemble d'image, une similarité entre la ou lesdites personnes détectées dans chaque image dudit au moins un premier ensemble d'images;
   - déterminer, sur la base des similarités ainsi déterminées, le nombre de personnes dans le véhicule.

Dans le cas d'un véhicule à l'arrêt, le nombre de personnes dans le véhicule peut être déterminé sur la base d'un seul ensemble d'images acquises par l'ensemble des détecteurs optiques. Alternativement, il est possible de procéder à l'acquisition, par chacun des détecteurs optiques, d'une pluralité d'images, auquel cas les étapes de détermination du nombre de personnes dans chaque image et la détermination des similarités seront effectuées pour chaque ensemble d'images. Cela permet de rendre la détermination du nombre de personnes encore plus robuste.

Dans le cas d'un véhicule en déplacement, l'acquisition par chacun des détecteurs optiques d'une pluralité d'images, permet d'acquérir des ensembles d'images avec des angles de vue différents d'un ensemble d'images à l'autre, ce qui augmente la robustesse de la détermination du nombre de personnes.

Selon un ou plusieurs exemples de réalisation, l'acquisition de ladite au moins une première image et de ladite au moins une deuxième image est simultanée ou quasi-simultanée.

Par acquisition quasi-simultanée, on comprend au sens de la description que les images sont acquises par lesdits au moins un premier détecteur optique et deuxième détecteur optique dans un intervalle de temps inférieur à environ 5 ms, avantageusement inférieur à environ 3 ms. Un ensemble d'images comprend ainsi des images acquises simultanément ou quasi-simultanément.

Dans d'autres exemples de réalisation, les images d'un ensemble d'images ne sont pas acquises simultanément ou quasi-simultanément. Lorsqu'il y a une pluralité d'ensembles d'images, résultant d'une pluralité d'acquisitions par les détecteurs optiques, lesdites images peuvent être horodatées et empilées par ordre d'horodatage.

Les ensembles d'images peuvent par exemple comprendre des images déterminées en fonction de l'horodatage.

Selon un ou plusieurs exemples de réalisation, ledit premier détecteur et ledit deuxième détecteur sont distants d'au moins environ 50 cm, voire d'au moins environ 2 m pour des applications sur autoroute, et généralement entre environ 50 cm et quelques dizaines de mètres. Dans la présente description, la distance entre deux détecteurs optiques comprenant chacun une surface de détection est définie par la distance entre des centres desdites surfaces de détection. En installant ledit au moins un premier détecteur et ledit au moins un deuxième détecteur de façon suffisamment éloignés, on s'assure de l'acquisition d'images avec des champs de vue suffisamment différents et une plus grande robustesse dans la détermination des similarités.

Selon un ou plusieurs exemples de réalisation, le module de détection du véhicule est configuré en outre pour détecter une sortie du véhicule de la zone de contrôle et l'arrêt de l'acquisition suite à la sortie du véhicule. Le nombre d'acquisitions par chacun des détecteurs optiques est ainsi déterminé par un signal de commande du module de détection. Dans d'autres exemples de réalisation, un nombre prédéterminé d'acquisitions peut être fixé, par exemple entre environ 1 et environ 50 acquisitions, avantageusement entre environ 5 et environ 15 acquisitions.

Notamment, le système ainsi décrit peut être configuré pour fonctionner avec un véhicule en déplacement sur une voie dédiée, par exemple une voie de covoiturage sur autoroute.

Selon un ou plusieurs exemples de réalisation, un axe optique dudit premier détecteur et un axe optique dudit deuxième détecteur font un angle compris entre environ 20° et environ 130°, avantageusement entre environ 20° et environ 90°, avantageusement entre environ 20° et environ 70°. Cette configuration permet d'obtenir des ensembles d'images avec au moins deux images acquises selon des angles de vue suffisamment différents, ce qui rend la détermination des similarités entre images plus robuste. En pratique, cette configuration correspond à deux images acquises sensiblement de côté et de trois quarts du véhicule, lorsque le véhicule est dans une région prédéterminée de la zone de contrôle.

Selon un ou plusieurs exemples de réalisation, ledit premier détecteur optique et ledit deuxième détecteur optique comprennent des bandes spectrales de détection différentes. Lesdites bandes spectrales sont par exemple comprises dans une bande spectrale visible (entre 400 nm et 750 nm), une bande spectrale proche infrarouge (750 nm - 1000 nm) ou une bande spectrale infrarouge (800 nm - 5000 nm).

Selon un ou plusieurs exemples de réalisation, ledit premier détecteur optique et/ou ledit deuxième détecteur optique comprend une caméra de type CCD ou CMOS sensible dans au moins l'une desdites bandes spectrales précitées.

Selon un ou plusieurs exemples de réalisation, au moins un desdits premier ou deuxième détecteurs optiques comprend un filtre polariseur. Un tel filtre permet de supprimer des réflexions parasites de la lumière ambiante.

Selon un ou plusieurs exemples de réalisation, le système comprend en outre au moins une source d'illumination du véhicule. La source d'illumination est configurée pour éclairer le véhicule dans une bande spectrale au moins partiellement superposée avec une bande spectrale du premier ou du deuxième détecteur optique. Selon des exemples de réalisation, il peut y avoir une source d'illumination pour chaque détecteur optique, notamment lorsque les détecteurs optiques ont des bandes spectrales de détection différentes. Selon un ou plusieurs exemples de réalisation, ladite au moins une source d'illumination est déclenchée par le module de détection du véhicule, de façon synchronisée avec l'acquisition.

Selon un ou plusieurs exemples de réalisation, le système comprend en outre un détecteur de luminosité et ladite au moins une source d'illumination et/ou au moins un paramètre d'au moins un desdits détecteurs optiques est déclenchée par le détecteur de luminosité.

Un tel détecteur de luminosité permet notamment d'adapter la mise en oeuvre du procédé à des conditions de jour ou de nuit, ainsi qu'aux autres conditions lumineuses de manière générale (nuageux, ciel bleu, pluie, neige, brouillard).

Selon un ou plusieurs exemples de réalisation, le module de détection du véhicule comprend un dispositif de détection de véhicule choisi parmi, un radar, un lidar, une boucle magnétique de détection ou tout autre dispositif de détection connu. Le module de détection du véhicule peut commander l'acquisition des détecteurs optiques en fonction d'un signal envoyé par le dispositif de détection de véhicule.

Dans d'autres exemples de réalisation, le module de détection du véhicule comprend un desdits détecteurs optiques.

Selon un ou plusieurs exemples de réalisation, le système comprend en outre un module de détection de la vitesse du véhicule. Il est alors possible de contrôler un ou plusieurs paramètres des détecteurs optiques en fonction d'un signal envoyé par ledit module de détection de la vitesse. Les paramètres comprennent par exemple une fréquence d'acquisition, un temps d'exposition, une vitesse d'obturation, une sensibilité, un gain, etc. Selon un ou plusieurs exemples de réalisation, la détection de la vitesse du véhicule est réalisée par le module de détection du véhicule.

Selon un ou plusieurs exemples de réalisation, le système comprend en outre un module de lecture automatique d'une plaque minéralogique du véhicule et/ou un type de véhicule (marque et/ou modèle) et/ou une couleur de véhicule. Les informations du véhicule (plaque minéralogique, marque et/ou modèle, couleur) pourront être stockées dans une base de données avec une heure de passage et le nombre de personnes détectées dans le véhicule.

Selon un ou plusieurs exemples de réalisation, l'unité de traitement comprend un réseau de neurones configuré pour détecter dans chaque image de chaque ensemble d'image, une ou plusieurs personnes et des coordonnées dans l'image de la ou desdites personnes.

Selon un deuxième aspect, la présente description concerne un procédé de détermination du nombre de personnes dans un véhicule mise en oeuvre au moyen d'un système selon le premier aspect.

La présente description concerne ainsi un procédé de détermination du nombre de personnes dans un véhicule selon la revendication 11.

Selon un ou plusieurs exemples de réalisation,:
- l'étape d'acquisition comprend l'acquisition d'une pluralité de premières images au moyen dudit premier détecteur optique et d'une pluralité de deuxièmes images au moyen dudit deuxième détecteur optique, lorsque le véhicule pénètre dans la zone de contrôle prédéterminée, l'acquisition résultant en une pluralité d'ensembles d'images acquises avec différents champs de vue ;
- l'étape de détection comprend la détection dans chaque image de chaque ensemble d'image, d'une ou plusieurs personnes et des coordonnées dans l'image de la ou desdites personnes ;
- l'étape de détermination de similarité comprend la détermination, pour chaque ensemble d'image, d'une similarité entre la ou lesdites personnes détectées dans chaque image de l'ensemble d'images;
- l'étape de détermination du nombre de personnes comprend la détermination, sur la base des similarités ainsi déterminées, d'un nombre de personnes dans le véhicule.

Selon un ou plusieurs exemples de réalisation, les images dudit au moins un ensemble d'images sont acquises de façon simultanée ou quasi-simultanée.

Selon un ou plusieurs exemples de réalisation, le procédé comprend en outre la détection d'une sortie du véhicule de la zone de contrôle et l'arrêt de l'acquisition suite à la sortie du véhicule.

Selon un ou plusieurs exemples de réalisation, le procédé comprend en outre une étape d'illumination du véhicule ; l'illumination peut être, selon un exemple, synchronisée avec l'acquisition.

Selon un ou plusieurs exemples de réalisation, le procédé comprend en outre une détection de la vitesse du véhicule et le contrôle d'au moins un paramètre d'au moins un desdits détecteurs optiques en fonction de la vitesse mesurée.

### Brève description des figures

D'autres avantages et caractéristiques de l'invention apparaîtront à la lecture de la description, illustrée par les figures suivantes :
[Fig. 1A] représente un diagramme fonctionnel d'un exemple de système de détermination du nombre de personnes dans un véhicule, selon la présente description ;
[Fig. 1B] représente un diagramme fonctionnel d'une partie d'un exemple de système de détermination du nombre de personnes dans un véhicule, selon la présente description, comprenant notamment la détection du véhicule et le contrôle des détecteurs optiques ;
[Fig. 2] représente des schémas illustrant la détection du véhicule dans la zone de contrôle et l'acquisition d'images par le premier détecteur optique et par le deuxième détecteur optique, dans un exemple de mise en oeuvre du procédé selon la présente description ;
[Fig. 3] illustre des ensembles d'images d'un véhicule acquises respectivement par un premier détecteur optique et par un deuxième détecteur optique, des directions centrales des champs de vue des détecteurs faisant un angle d'environ 50 degrés.
[Fig. 4] illustre, selon un premier exemple, une étape de détermination de similarités dans un ensemble d'images comprenant deux images, entre les personnes détectées dans chaque image.
[Fig. 5] illustre, selon un deuxième exemple, une étape de détermination de similarités dans un ensemble d'images comprenant deux images, entre les personnes détectées dans chaque image.

### Description détaillée de l'invention

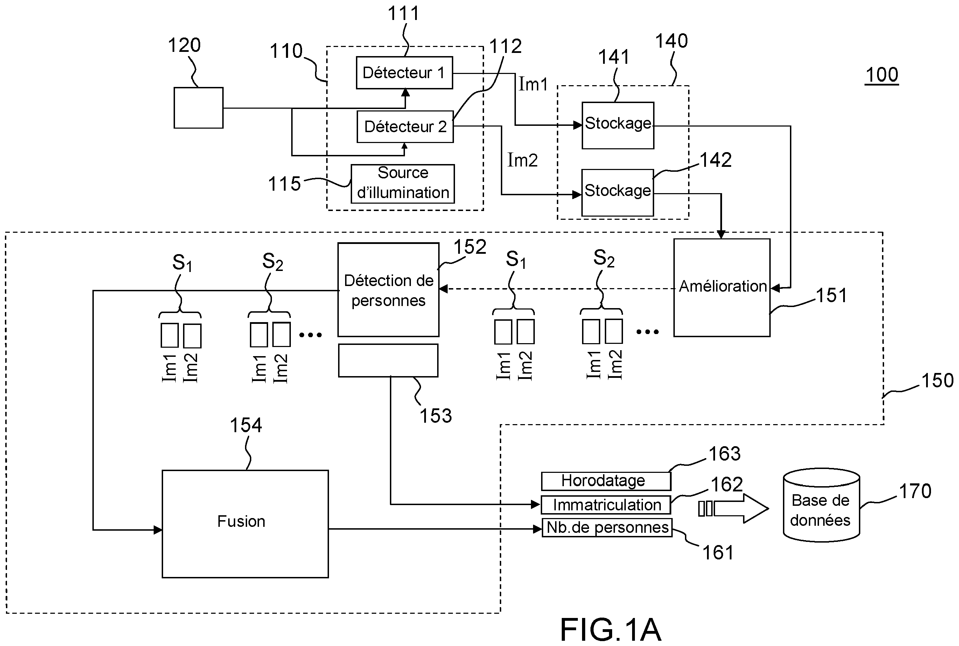

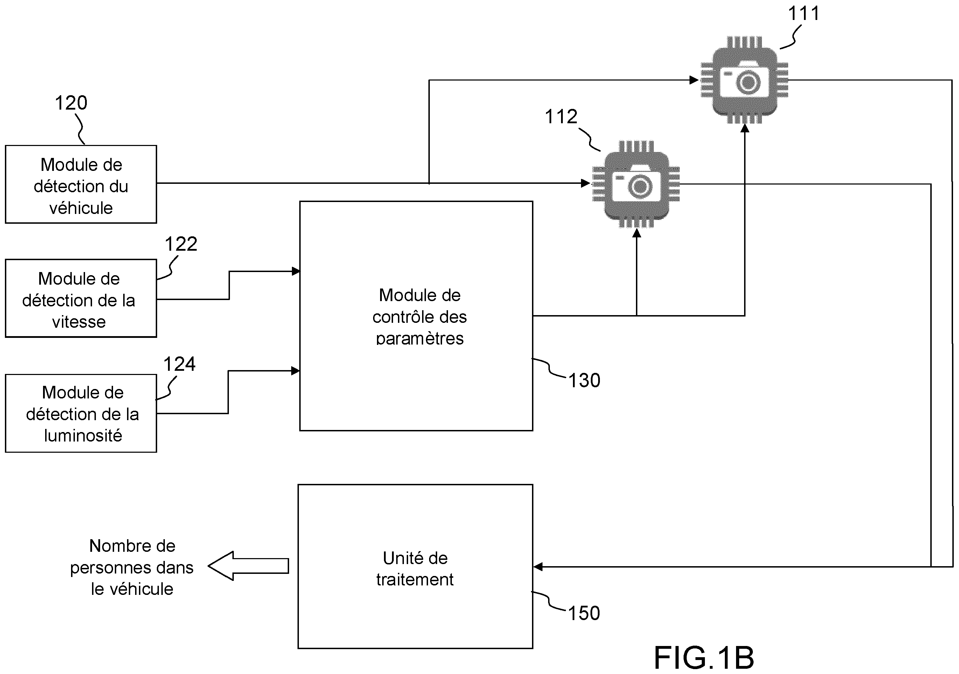

La Fig. 1A représente un diagramme fonctionnel d'un exemple de système 100 pour la mise en oeuvre d'un procédé de détermination du nombre de personnes dans un véhicule selon la présente description, et la Fig. 1B représente un diagramme fonctionnel d'une partie du système 100, selon un exemple de réalisation.

Le système 100 de détermination du nombre de personnes illustré sur la Fig. 1A comprend un bloc de détection optique 110 avec dans cet exemple un premier détecteur optique 111, un deuxième détecteur optique 112, les champs de vue des premier et deuxième détecteurs optiques étant différents, et une source d'illumination 115. Bien entendu, le bloc détection optique peut comprendre plus de deux détecteurs optiques de champs de vue différents et au moins une source d'illumination par détecteur optique.

Le système 100 comprend en outre un module de détection 120 configuré pour déclencher l'acquisition d'au moins une première image Im₁ par le premier détecteur optique 111 et d'au moins une deuxième image Im₂ par le deuxième détecteur optique lorsque le véhicule pénètre dans une zone de contrôle prédéterminée. Cette acquisition peut être simultanée ou quasi-simultanée.

Le système 100 comprend un module de stockage 140 (optionnel) des images, avec un premier module de stockage 141 des images acquises par le premier détecteur et un deuxième module de stockage 141 des images acquises par le premier détecteur. Un tel module de stockage peut permettre le stockage pour des traitements ultérieurs sur les images.

Comme illustré sur la Fig. 1A, le système 100 comprend également une unité de traitement 150 des images ainsi stockées. L'unité de traitement comprend dans cet exemple un module d'amélioration des images 151. Ce module vise à améliorer, au moyen de traitements connus, certains paramètres des images, comme par exemple le contraste, le gain, la luminosité, afin de faire ressortir les objets que l'on cherche à détecter.

A la sortie du module d'amélioration des images, un ou plusieurs ensembles d'images S₁, S₂, ... sont formés. Chaque ensemble d'image Sᵢ comprend par exemple les images acquises dans un intervalle de temps donné, typiquement un intervalle de temps inférieur à environ 5 ms, par le premier détecteur optique 111 et le deuxième détecteur optique 112.

L'unité de traitement 150 comprend en outre un module de détection de personnes 152 configuré pour détecter, dans chaque image de chaque ensemble d'image Si formé par les images acquises par chacun des premier et deuxièmes détecteurs optiques, une ou plusieurs personnes et des coordonnées dans l'image de la ou desdites personnes. Comme cela sera décrit plus en détail par la suite, le module de détection de personnes 152 peut utiliser un réseau de neurones.

L'unité de traitement 150 comprend en outre un module de détermination de similarités entre les personnes détectées, appelé « module de fusion » dans la présente description. La fusion consiste à déterminer, pour chaque ensemble d'image, une similarité entre la ou lesdites personnes détectées dans chaque image de l'ensemble d'images. A partir des similarités ainsi déterminées entre les personnes détectées, il est possible de déterminer un nombre de personnes 161 dans le véhicule. Ce nombre de personnes peut être stocké dans une base de données 170 avec par exemple, une immatriculation 162 du véhicule et/ou une marque et modèle et/ou une couleur du véhicule, et un horodatage 163, l'immatriculation du véhicule et/ou une marque et modèle du véhicule pouvant être fournis par un module de détection dédié 153.

De façon générale, l'unité de traitement 150 à laquelle il est fait référence dans la présente description peut comprendre une ou plusieurs entités physiques, par exemple un ou plusieurs ordinateurs, et comprend notamment les modules d'amélioration, de détection de personnes et de fusion. Lorsque dans la présente description, il est fait référence à des étapes de calcul ou traitement pour la mise en oeuvre notamment d'étapes de procédés, il est entendu que chaque étape de calcul ou traitement peut être mis en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur ou du code logiciel. Ces instructions peuvent être stockées ou transmises vers un support de stockage lisible par l'unité de contrôle et/ou être exécutées par l'unité de contrôle afin de mettre en oeuvre ces étapes de calcul ou traitement.

La Fig. 1B décrit plus précisément certains modules du système 100 illustré sur la Fig. 1A.

Le module de détection 120 comprend par exemple un dispositif de détection de véhicule, par exemple un radar, un lidar, une boucle magnétique de détection ou tout autre dispositif de détection connu. Le module de détection du véhicule peut commander l'acquisition des détecteurs optiques 111, 112 en fonction d'un signal envoyé par le dispositif de détection de véhicule. Dans d'autres exemples de réalisation, le module de détection du véhicule comprend un des détecteurs optiques qui peut lui-même déclencher l'acquisition de l'autre détecteur optique.

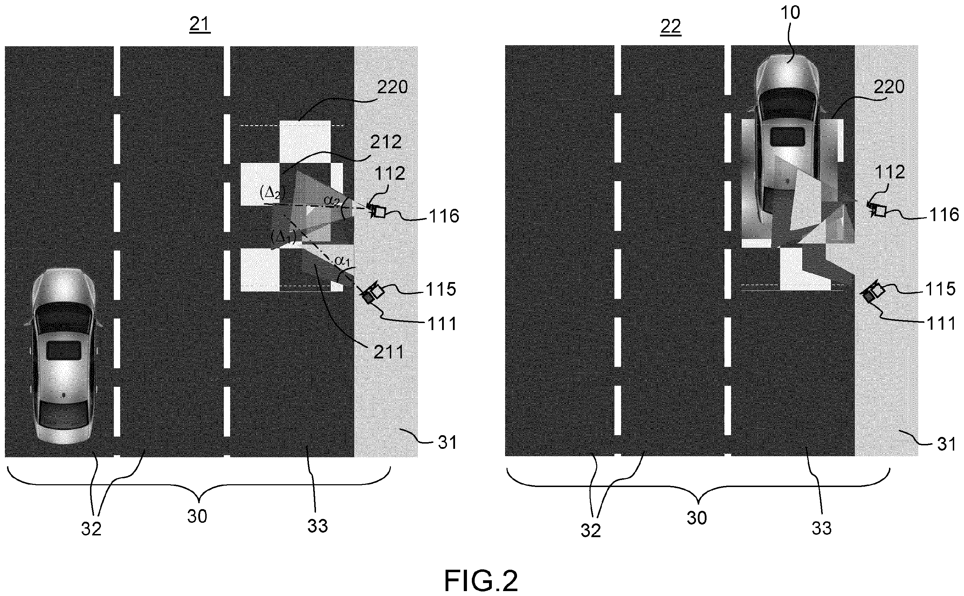

Comme illustré sur la Fig. 1B, le système 100 peut comprendre, en plus du module de détection 120 et de façon optionnelle, un module 122 de détection de la vitesse du véhicule et un module 124 de détection de la luminosité. Ces deux modules peuvent permettre de contrôler des paramètres des premier et deuxième détecteurs optiques au moyen d'un module 130 de contrôle des paramètres. Plus précisément, la vitesse du véhicule pourra permettre de contrôler l'ouverture des détecteurs optiques (également appelé ouverture du diaphragme) et les conditions de luminosité détectées pourront permettre de contrôler les paramètres de temps de pose ou de durée d'exposition et la sensibilité (également appelé l'ISO) des détecteurs optiques. Les Figs. 2 à 4 illustrent plus précisément des étapes du procédé selon un exemple non limitatif de la présente description. Cet exemple illustre le cas de la détection du nombre de personnes dans un véhicule en déplacement, par exemple en déplacement sur une voie dédiée.

Ainsi, la Fig. 2 illustre le cas d'une autoroute 30 avec un ensemble de voies de circulation 32 et une voie dédiée 33 pour le covoiturage. Un terre-plein 31 limite les voies de l'autoroute dans les deux sens de circulation, seul un sens de circulation étant montré sur la fig. 2.

Le système de détection du nombre de personnes dans un véhicule est agencé sur le terre-plein central 31. Seul est représenté ici le bloc de détection optique avec un premier détecteur optique 111 comprenant un premier champ de vue 211 caractérisé par un axe optique Δ₁ en un angle de champ α₁ et un deuxième détecteur optique 112 comprenant un deuxième champ de vue 212 différent du premier champ de vue, caractérisé par un axe optique Δ₂ en un angle de champ α₂ Le bloc de détection optique comprend par ailleurs dans cet exemple, pour chaque détecteur optique, un dispositif d'illumination (115, 116).

Dans cet exemple, les axes optiques Δ₁ et Δ₂ sont sécants et font un angle entre eux compris par exemple entre environ 20° et environ 130°, par exemple entre environ 20° et environ 90°.

Ainsi selon un exemple, un premier axe optique d'un premier détecteur optique peut être agencé selon une direction parallèle et face à la route (positionné sur un portique) et l'axe optique d'un deuxième détecteur optique à 90 degrés du premier axe optique.

Selon un autre exemple, dans le cas d'un équipement avec trois détecteurs optiques, un détecteur optique peut-être positionné de telle sorte à visualiser le ¾ arrière du véhicule lorsque le véhicule est dans une position donnée dans la zone de contrôle, un autre détecteur optique peut-être positionné avec un axe optique faisant un angle compris entre 20° à 50° par rapport à l'axe optique du premier détecteur optique et un troisième détecteur optique peut-être positionné avec un axe optique faisant un angle compris entre 90° et 150° par rapport à l'axe optique du premier détecteur optique.

Un module de détection du véhicule (non représenté sur la Fig. 2) permet de déclencher l'acquisition d'images Im₁ par le premier détecteur optique 111 et d'images Im₂ par le deuxième détecteur optique lorsque le véhicule pénètre dans une zone de contrôle 220. Il s'ensuit l'acquisition d'une pluralité d'ensembles d'images acquises par chacun des détecteurs optiques 111, 112, les images pouvant être acquises de façon simultanée ou quasi-simultanée.

Le module de détection comprend par exemple une boucle de détection magnétique au sol. La boucle de détection magnétique détecte la pénétration du véhicule dans la zone de contrôle 220 et la sortie du véhicule de la zone de contrôle. L'acquisition d'images par les détecteurs optiques 111, 112 est déclenchée par un signal émis par le module de détection et s'arrête par exemple à réception d'un signal envoyé par le module de détection lorsque la sortie du véhicule de la zone de contrôle est détectée. A titre d'exemple, la Fig. 2 illustre sur le schéma 21 un premier instant pour lequel aucun véhicule n'est détecté puis sur le schéma 22 un deuxième instant pour lequel un véhicule a pénétré la zone de contrôle 220.

A noter que le module de détection peut également déclencher les sources d'illumination 115, 116, par exemple de façon synchrone avec l'acquisition d'images par les détecteurs optiques. Par exemple, une source d'illumination peut comprendre un projecteur infrarouge configuré pour illuminer l'intérieur du véhicule dans le cas où l'un des détecteurs optiques est sensible dans cette bande spectrale.

Selon des exemples de réalisation le système comprend un module de détection de la vitesse du véhicule (non représenté sur la Fig. 2). Un tel module peut commander certains paramètres des détecteurs optiques comme la fréquence d'acquisition ou le temps de pause afin d'ajuster le nombre d'images acquises pendant la durée de présence du véhicule dans la zone de contrôle. A noter que le module de détection peut dans certains exemples détecter la pénétration du véhicule dans la zone de contrôle et sa vitesse (cas d'une boucle de détection, d'un lidar ou d'un radar par exemple).

Par exemple, on pourra ajuster les paramètres des détecteurs optiques en fonction de la vitesse pour avoir entre 1 et environ 50 acquisitions d'images par chacun des deux détecteurs optiques.

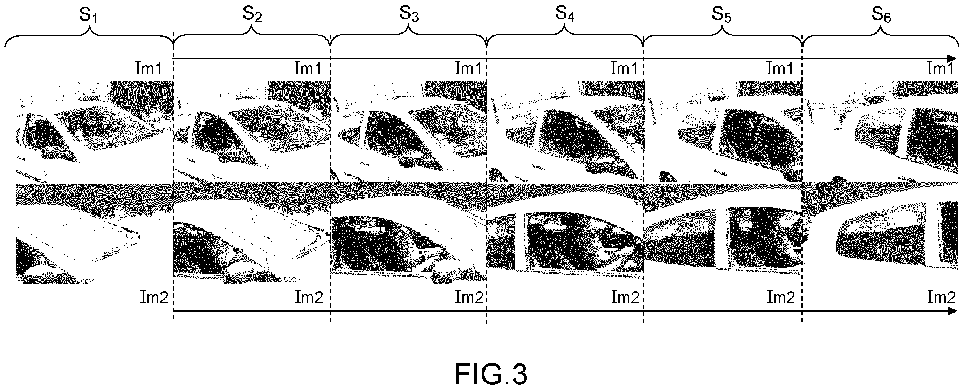

La Fig. 3 illustre ainsi à titre d'illustrations des images Im₁, Im₂ acquises simultanément par un premier détecteur optique et par un deuxième détecteur optique. Au fur et à mesure que le véhicule se déplace dans la zone de contrôle, la région imagée du véhicule change. Il en résulte une pluralité d'ensembles d'images S₁ - S₆.

A partir de ces ensembles d'images, l'unité de traitement est configurée pour déterminer, dans chaque image de chaque ensemble d'images, un nombre de personnes.

La détection de personnes présentes à l'intérieur d'un habitacle de véhicule à partir d'une image peut être réalisée de façon connue, par exemple à partir d'un algorithme basé sur des réseaux de neurones, par exemple des réseaux de neurones convolutionnels tels que décrit par exemple dans l'article de J. Redmon et al. [Réf. 5]. Un réseau de neurones convolutionnels se présente comme une fonction mathématique constituée de couches successives de sous-fonctions appelées neurones. Le réseau de neurones prend en valeur d'entrée un vecteur constitué des valeurs en intensité de chaque pixel d'une image à analyser. Le réseau peut appliquer de manière successive des opérations de filtrage (ou « activation ») à l'ensemble des pixels qui lui ont été fournis. L'activation de chaque neurone va permettre de déterminer un « poids » qui a été préalablement déterminé par un apprentissage ; un poids est un coefficient synaptique qui permet d'établir à partir d'un certain seuil, un contact entre deux neurones. Le poids peut alors déterminer une valeur de l'image associée à un label, par exemple : « personne », « véhicule », « camion », « téléphone », « camionnette », « motocyclette », « casque de moto », etc.

Selon un exemple de réalisation, les poids des neurones dans le réseau sont déterminés à partir d'un apprentissage du réseau de neurones dit « supervisé ». Cet apprentissage consiste à injecter des milliers d'images labellisés dans le réseau, ce qui permet à ce dernier d'ajuster ces poids.

Ainsi, l'étape de détermination de personnes dans chaque image de chaque ensemble d'images permet de déterminer une ou plusieurs personnes et leurs coordonnées dans les images acquises.

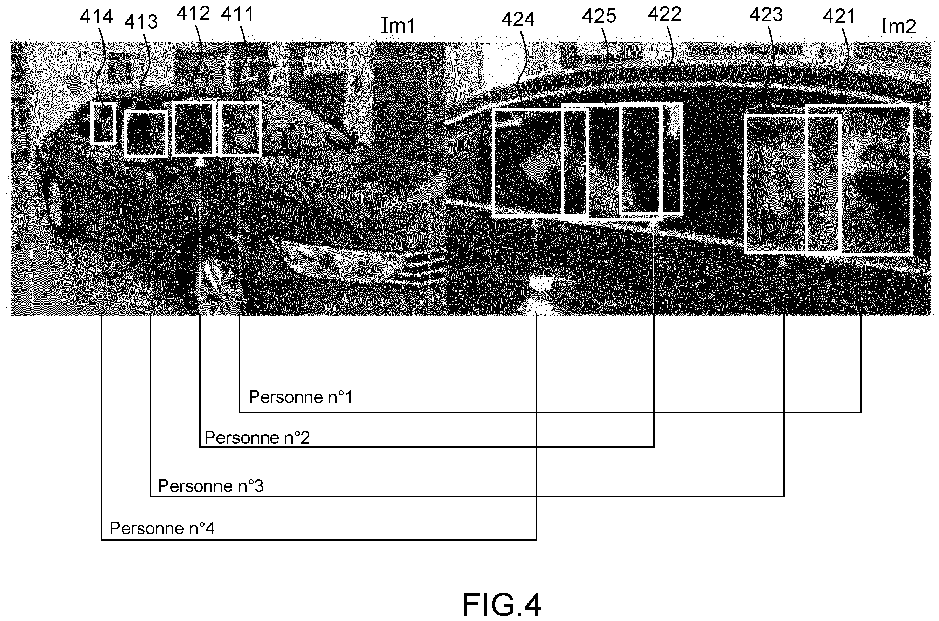

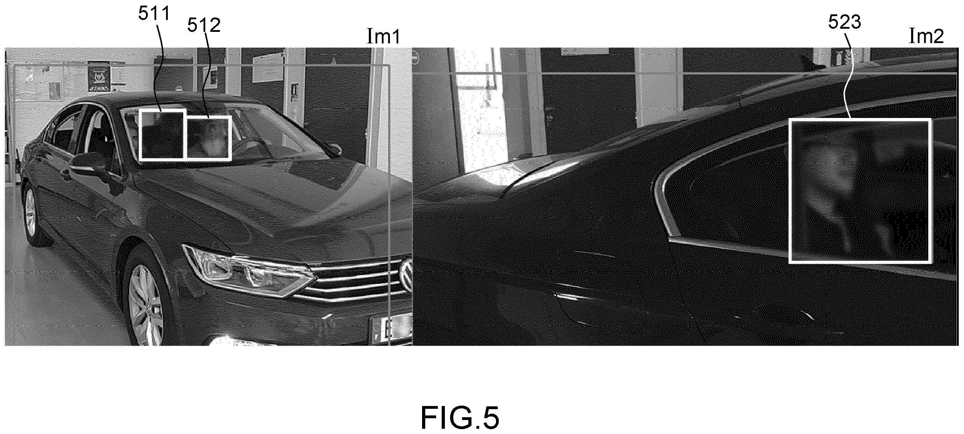

Les Figs. 4 et 5 illustrent selon deux exemples la détermination de similarités entre personnes détectées dans deux images d'un ensemble d'images.

Dans ces deux exemples, l'unité de traitement détecte, par exemple au moyen d'un réseau de neurones tel que décrit ci-dessus, dans chaque image dudit au moins un premier ensemble d'image, une ou plusieurs personnes et des coordonnées dans l'image de la ou desdites personnes. Dans ces exemples, les coordonnées de chaque personne détectée sont définies par un rectangle qui entoure la personne détectée. La Fig. 4 illustre ainsi, dans deux images Im₁ et Im₂ d'un ensemble d'images, les coordonnées d'objets que le réseau de neurones a labellisés comme étant des personnes, ces coordonnées étant schématisées par des rectangles référencés 414, 413, 412, 411, 424, 425, 422, 423, 421.

De la même manière, la Fig. 5 illustre, dans deux images Im₁ et Im₂ d'un ensemble d'images, les coordonnées d'objets que le réseau de neurones a labellisés comme étant des personnes, ces coordonnées étant schématisées par des rectangles référencés 511, 512, 523.

S'ensuit l'étape dite de « fusion », c'est-à dire la détermination de similarités entre les personnes détectées dans les images d'un même ensemble d'images.

Selon un exemple de réalisation, on peut utiliser pour la détermination de la similarité une méthode mathématique connue consistant à retrouver dans deux images du même véhicule pris de différents points d'observation les mêmes personnes.

La géométrie épipolaire, dont les bases ont été établies par le mathématicien Guido Hauck, et qui est décrite par exemple dans l'ouvrage de Gang Xu et al. [Réf. 6], est un modèle mathématique de géométrie qui décrit les relations géométriques de différentes images du même objet acquises à partir de différents points d'observation. Cette technique mathématique permet de déterminer les pixels en correspondance, c'est-à-dire ceux formés par un seul point ou zone de l'objet observé sur chacune des images.

Ainsi, pour chaque ensemble d'images, les coordonnées des personnes détectées peuvent être injectées en entrée du module de fusion 154.

Par exemple, en se référant à la Fig. 4, les coordonnées de personnes détectées correspondant aux rectangles 411, 412, 413 et 414 de l'image Im₁ sont entrées dans le module de fusion 154. De la même manière les coordonnées de personnes détectées correspondant aux rectangles 421, 422, 423, 424, 425 de l'image Im₂ sont entrées dans le module de fusion 154.

L'application de la géométrie épipolaire permet de déterminer si les coordonnées 411 par exemple d'une personne détectée dans l'image Im₁ correspondent aux coordonnées d'une personne détectée dans l'image Im₂. Comme cela est symbolisé par une flèche sur la Fig. 4, il apparaît que le module de fusion a déterminé que les coordonnées 411 correspondent aux coordonnées 421, après correction de l'angle de vue. On en déduit donc que les deux personnes détectées ayant pour coordonnées 411 et 421 respectivement dans les images Im₁ et Im₂ sont similaires. Comme cela est illustré par des flèches sur la Fig. 4, on détermine de la même manière une similarité entre la personne 2 de coordonnées 412 détectée dans l'image Im₁ avec la personne détectée dans l'image Im₂ avec des coordonnées 422. On détermine aussi une similarité entre la personne 3 de coordonnées 413 détectée dans l'image Im₁ avec la personne détectée dans l'image Im₂ avec des coordonnées 423 et une similarité entre la personne 4 de coordonnées 414 détectée dans l'image Im₁ avec la personne détectée dans l'image Im₂ avec des coordonnées 424.

Ainsi, en sortie, le module indique si les coordonnées des coordonnées qui lui ont été fournies ont une relation de correspondance calculée à partir de la méthode de la géométrie épipolaire entre elles, c'est-à-dire si elles correspondent à une même personne préalablement identifié par le réseau de neurones. A partir des similarités détectées, on peut en déduire le nombre de personnes dans le véhicule.

Dans l'exemple de la Fig. 4 par exemple, on peut conclure avec une bonne fiabilité qu'il y a 5 personnes, et non pas 4 comme on pourrait le penser si on n'observait que l'image Im₁. Plus précisément, 4 personnes sont détectées sur les deux images avec une similarité entre elles, ce qui permet de ne pas compter deux fois la même personne, et on peut ajouter la 5ème personne détectée sur l'image Im2 qui n'était pas visible sur l'image Im₁.

Si l'on se réfère maintenant à l'exemple de la Fig. 5, les coordonnées de personnes détectées correspondant aux rectangles 511 et 512 de l'image Im₁ sont entrées dans le module de fusion 154. De la même manière les coordonnées d'une personne détectée correspondant au rectangle 523 de l'image Im₂ sont entrées dans le module de fusion 154.

Comme cela apparaît sur la Fig. 5, l'application de la géométrie épipolaire permet de déterminer qu'aucune des personnes détectées dans les deux images sont similaires. Ainsi, contrairement à ce que l'observation d'une image pourrait laisser conclure, on peut déduire ici qu'il y a au moins 3 personnes dans le véhicule. En l'occurrence il y en a davantage et la robustesse du procédé est encore améliorée en travaillant sur plusieurs ensembles d'images.

Bien que décrite à travers un certain nombre d'exemples de réalisation, le système et le procédé de détermination du nombre de personnes dans un véhicule selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### Références

Réf. 1 : US 2015/0278617
Réf. 2 : WO 2008/099146
Réf. 3 : US 2008/0175438
Réf. 4 : EP3654276
Réf. 5 : J. Redmon et al., "You Only Look Once: Unified, Real-Time Object Detection", 2016 IEEE Conférence on Computer Vision and Pattern Recognition (CVPR) (27-30 June 2016), Section 2 "Unified Detection" DOI: 10.1109/CVPR.2016.91
Réf. 6 : G. Xu et al., « Epipolar Geometry in Stéréo, Motion and Object Recognition: A Unified Approach", Chapitre 2 "camera models and epipolar geometry", Springer Science & Business Media, 30 sept. 1996, ISBN 978-94-015-8668-9

## Revendications

1. Système (100) de détermination du nombre de personnes dans un véhicule (10), ledit système comprenant :
- au moins un premier détecteur optique (111) avec un premier axe optique (Δ₁) et un premier champ de vue angulaire (211) ;
- au moins un deuxième détecteur optique (112) avec un deuxième axe optique (Δ₂) et un deuxième champ de vue angulaire (212), le premier axe optique et le deuxième axe optique étant sécants et faisant un angle compris entre environ 20° et environ 130°, de telle sorte que le premier champ de vue (211) et le deuxième champ de vue (212) sont différents et se recouvrent au moins partiellement;
- un module de détection (120) configuré pour déclencher l'acquisition d'au moins une première image du véhicule (Im₁) par ledit premier détecteur optique et d'au moins une deuxième image du véhicule (Im₂) par ledit deuxième détecteur optique lorsque le véhicule pénètre dans une zone de contrôle (220) prédéterminée, résultant en au moins un premier ensemble (S₁) d'images (Im₁, Im₂) du véhicule acquises avec des champs de vue différents; le système de détermination du nombre de personnes étant **caractérisé en ce qu'**il comprend :
- une unité de traitement (150) configurée pour :
- détecter dans ladite au moins une première image (Im₁) et ladite au moins une deuxième image (Im₂) dudit au moins un premier ensemble d'image, une ou plusieurs personnes et des coordonnées (411 - 414, 421 - 424) dans l'image de la ou desdites personnes ;
- déterminer, par géométrie épipolaire, à partir des coordonnées (411 - 414) de chacune desdites personnes détectées dans ladite au moins une première image (Im₁) de l'ensemble d'images, les coordonnées correspondantes de ladite personne dans ladite au moins une deuxième image (Im₂) de l'ensemble d'images ;
- déterminer si lesdites coordonnées correspondantes sont les coordonnées (421 - 424) d'une personne détectée dans ladite au moins une deuxième image (Im₂) ;
- dans l'affirmative, en déduire qu'il y a une similarité entre ladite personne détectée dans ladite au moins une première image (Im₁) de l'ensemble d'images et ladite personne détectée dans ladite au moins une deuxième image (Im₂) de l'ensemble d'images;
- déterminer, sur la base des similarités ainsi déterminées entre la ou lesdites personnes détectées dans ladite au moins une première image (Im₁) et la ou lesdites personnes détectées dans ladite au moins une deuxième image (Im₂) de l'ensemble d'images, le nombre de personnes dans le véhicule.

2. Système selon la revendication 1, dans lequel :
- ledit module de détection (120) est configuré pour déclencher l'acquisition d'une pluralité de premières images (Im₁) par ledit premier détecteur optique et d'une pluralité de deuxièmes images (Im₂) par ledit deuxième détecteur optique lorsque le véhicule pénètre dans la zone de contrôle (220) prédéterminée, résultant en une pluralité d'ensembles d'images acquises avec différents champs de vue ;
- ladite unité de traitement (150) est configurée pour :
- détecter dans chaque image de chaque ensemble d'image, une ou plusieurs personnes et des coordonnées dans l'image de la ou desdites personnes ;
- déterminer, pour chaque ensemble d'image, des similarités entre la ou lesdites personnes détectées dans chaque image dudit au moins un premier ensemble d'images;
- déterminer, sur la base des similarités ainsi déterminées, le nombre de personnes dans le véhicule.

3. Système selon l'une quelconque des revendications précédentes, dans lequel les images dudit au moins un ensemble d'images sont acquises de façon simultanée ou quasi-simultanée.

4. Système selon l'une quelconque des revendications précédentes, dans lequel ledit premier détecteur et ledit deuxième détecteur comprennent des bandes spectrales de détection différentes.

5. Système selon l'une quelconque des revendications précédentes, dans lequel ledit premier détecteur et ledit deuxième détecteur sont distants d'au moins environ 50 cm.

6. Système selon l'une quelconque des revendications précédentes, comprenant en outre au moins une source d'illumination (115, 116) du véhicule.

7. Système selon l'une quelconque des revendications précédentes, dans lequel le module de détection (120) est configuré en outre pour détecter une sortie du véhicule de la zone de contrôle et l'arrêt de l'acquisition suite à la sortie du véhicule.

8. Système selon l'une quelconque des revendications précédentes, comprenant en outre un module de détection (122) de la vitesse du véhicule.

9. Système selon l'une quelconque des revendications précédentes, comprenant en outre un module de lecture automatique d'une plaque minéralogique du véhicule et/ou de détermination du type de véhicule et/ou de la couleur du véhicule.

10. Système selon l'une quelconque des revendications précédentes, dans lequel l'unité de traitement (150) comprend un réseau de neurones configuré pour détecter dans chaque image de chaque ensemble d'image, une ou plusieurs personnes et des coordonnées dans l'image de la ou desdites personnes.

11. Procédé de détermination du nombre de personnes dans un véhicule (10), ledit procédé comprenant :
- une étape d'acquisition, lorsque le véhicule pénètre dans une zone de contrôle (220) prédéterminée, d'au moins une première image du véhicule (Im₁) au moyen d'un premier détecteur optique avec un premier axe optique (Δ₁) et un premier champ de vue (211) et d'au moins une deuxième image du véhicule (Im₂) au moyen d'un deuxième détecteur optique avec un deuxième axe optique (Δ₂) et un deuxième champ de vue (212), le premier axe optique et le deuxième axe optique étant sécants et faisant un angle compris entre environ 20° et environ 130°, de telle sorte que le premier champ de vue (211) et le deuxième champ de vue (212) sont différents et se recouvrent au moins partiellement, l'acquisition résultant en au moins un premier ensemble (S₁) d'images (Im₁, Im₂) du véhicule acquises avec des champs de vue différents; **caractérisé en ce que** le procédé comprend en outre :
- une étape de détection, dans ladite au moins une première image (Im₁) et ladite au moins une deuxième image (Im₂) dudit au moins un premier ensemble (S₁) d'images, d'une ou plusieurs personnes et de coordonnées (411-414, 421-425) dans l'image de la ou desdites personnes ;
- une étape de détermination, par géométrie épipolaire, à partir des coordonnées (411 - 414) de chacune desdites personnes détectées dans ladite au moins une première image (Im₁) de l'ensemble d'images, des coordonnées correspondantes de ladite personne dans ladite au moins une deuxième image (Im₂) de l'ensemble d'images ;
- une étape de détermination de similarité, dans laquelle il est déterminé si lesdites coordonnées correspondantes sont les coordonnées (421 - 425) d'une personne détectée dans ladite au moins une deuxième image afin d'en déduire, dans l'affirmative, qu'il y a une similarité entre ladite personne détectée dans ladite au moins une première image (Im₁) de l'ensemble d'images et ladite personne détectée dans ladite au moins une deuxième image (Im₂) de l'ensemble d'images;
- une étape de détermination, sur la base des similarités ainsi déterminées entre la ou lesdites personnes détectées dans ladite au moins une première image (Im₁) et la ou lesdites personnes détectées dans ladite au moins une deuxième image (Im₂) de l'ensemble d'images, du nombre de personnes dans le véhicule.

12. Procédé selon la revendication 11, dans lequel :
- l'étape d'acquisition comprend l'acquisition d'une pluralité de premières images (Im₁) au moyen dudit premier détecteur optique et d'une pluralité de deuxièmes images (Im₂) au moyen dudit deuxième détecteur optique, lorsque le véhicule pénètre dans la zone de contrôle (220) prédéterminée, l'acquisition résultant en une pluralité d'ensembles d'images acquises avec différents champs de vue ;
- l'étape de détection comprend la détection dans chaque image de chaque ensemble d'image, d'une ou plusieurs personnes et de coordonnées dans l'image de la ou desdites personnes ;
- l'étape de détermination de similarité comprend la détermination, pour chaque ensemble d'image, de similarités entre la ou lesdites personnes détectées dans chaque image de l'ensemble d'images;
- l'étape de détermination du nombre de personnes comprend la détermination, sur la base des similarités ainsi déterminées, d'un nombre de personnes dans le véhicule.

13. Procédé selon l'une quelconque des revendications 11 ou 12, dans lequel les images dudit au moins un ensemble d'images sont acquises de façon simultanée ou quasi-simultanée.

14. Procédé selon l'une quelconque des revendications 11 à 13, comprenant en outre une étape d'illumination du véhicule, synchronisée avec l'étape d'acquisition.

15. Procédé selon l'une quelconque des revendications 11 à 14, dans lequel le véhicule est un véhicule en déplacement et le procédé comprend en outre la détection d'une sortie du véhicule de la zone de contrôle et l'arrêt de l'acquisition suite à la sortie du véhicule.

16. Procédé selon l'une quelconque des revendications 11 à 15, dans lequel le véhicule est un véhicule en déplacement et le procédé comprend en outre la détection de la vitesse du véhicule et le contrôle d'au moins un paramètre d'au moins un desdits détecteurs optiques en fonction de la vitesse mesurée.

## Patentansprüche

1. System (100) zur Bestimmung der Anzahl von Personen in einem Fahrzeug (10), wobei das System aufweist:
- mindestens einen ersten optischen Detektor (111) mit einer ersten optischen Achse (Δ₁) und einem ersten winkelförmigen Sichtfeld (211);
- mindestens einen zweiten optischen Detektor (112) mit einer zweiten optischen Achse (Δ₂) und einem zweiten winkelförmigen Sichtfeld (212), wobei die erste optische Achse und die zweite optische Achse einander schneiden und einen Winkel zwischen etwa 20° und etwa 130° einschließen, wodurch das erste Sichtfeld (211) und das zweite Sichtfeld (212) unterschiedlich sind und sich zumindest teilweise überlappen;
- ein Detektionsmodul (120), das derart ausgebildet ist, dass es die Erfassung mindestens eines ersten Bildes des Fahrzeugs (Im₁) durch den ersten optischen Detektor und mindestens eines zweiten Bildes des Fahrzeugs (Im₂) durch den zweiten optischen Detektor auslöst, wenn das Fahrzeug in einen vorbestimmten Kontrollbereich (220) einfährt, was zu mindestens einer ersten Ansammlung (S₁) von Bildern (Im₁, Im₂) des Fahrzeugs führt, die mit unterschiedlichen Sichtfeldern erfasst werden; wobei das System zur Bestimmung der Anzahl von Personen **dadurch gekennzeichnet ist, dass** es Folgendes umfasst:
- eine Verarbeitungseinheit (150), die ausgebildet ist, zur:
- Detektion einer oder mehrerer Personen in dem mindestens einen ersten Bild (Im₁) und dem mindestens einen zweiten Bild (Im₂) der mindestens einen ersten Ansammlung von Bildern und von Koordinaten (411 - 414, 421 - 424) der Person oder der Personen im Bild;
- Bestimmung, mittels Epipolargeometrie, ausgehend von den Koordinaten (411 - 414) jeder der Personen, die in dem mindestens einen ersten Bild (Im₁) der Ansammlung von Bildern detektiert wurden, der entsprechenden Koordinaten der Person in dem mindestens einen zweiten Bild (Im₂) der Ansammlung von Bildern;
- Bestimmung, ob die entsprechenden Koordinaten mit den Koordinaten (421 - 424) einer Person übereinstimmen, die in dem mindestens einen zweiten Bild (Im₂) detektiert wurde;
- falls dies der Fall ist, daraus ableiten, dass es eine Ähnlichkeit zwischen der Person, die in dem mindestens einen ersten Bild (Im₁) der Ansammlung von Bildern detektiert wurde, und der Person, die in dem mindestens einen zweiten Bild (Im₂) der Ansammlung von Bildern detektiert wurde, gibt;
- Bestimmung, auf der Grundlage der so bestimmten Ähnlichkeiten zwischen der oder den Personen, die in dem mindestens einen ersten Bild (Im₁) detektiert wurden, und der oder den Personen, die in dem mindestens einen zweiten Bild (Im₂) der Ansammlung von Bildern detektiert wurden, der Anzahl von Personen in dem Fahrzeug.

2. System nach Anspruch 1, wobei:
- das Detektionsmodul (120) derart ausgebildet ist, dass es die Erfassung einer Vielzahl von ersten Bildern (Im₁) durch den ersten optischen Detektor und einer Vielzahl von zweiten Bildern (Im₂) durch den zweiten optischen Detektor auslöst, wenn das Fahrzeug in den vorbestimmten Kontrollbereich (220) einfährt, was in einer Vielzahl von Ansammlungen von Bildern resultiert, die mit unterschiedlichen Blickfeldern erfasst werden;
- die Verarbeitungseinheit (150) ausgebildet ist, um:
- in jedem Bild jeder Ansammlung von Bildern eine oder mehrere Personen und Koordinaten der Person oder der Personen im Bild zu detektieren;
- für jede Ansammlung von Bildern Ähnlichkeiten zwischen der oder den Personen zu bestimmen, die in jedem Bild, der mindestens einen ersten Ansammlung von Bildern erfasst wurden;
- auf Grundlage der so ermittelten Ähnlichkeiten die Anzahl der Personen im Fahrzeug zu bestimmen.

3. System nach einem der vorhergehenden Ansprüche, wobei die Bilder der mindestens einen Ansammlung von Bildern gleichzeitig oder quasi-gleichzeitig erfasst werden.

4. System nach einem der vorhergehenden Ansprüche, wobei der erste Detektor und der zweite Detektor unterschiedliche Spektralbänder der Detektion aufweisen.

5. System nach einem der vorhergehenden Ansprüche, wobei der erste Detektor und der zweite Detektor mindestens etwa 50 cm voneinander entfernt sind.

6. System nach einem der vorhergehenden Ansprüche, das ferner mindestens eine Lichtquelle (115, 116) für die Beleuchtung des Fahrzeugs aufweist.

7. System nach einem der vorhergehenden Ansprüche, wobei das Detektionsmodul (120) ferner konfiguriert ist, um ein Verlassen des Kontrollbereichs durch das Fahrzeug und das Stoppen der Erfassung infolge des Verlassens des Fahrzeugs zu detektieren.

8. System nach einem der vorhergehenden Ansprüche, das ferner ein Detektionsmodul (122) zur Erfassung der Fahrzeuggeschwindigkeit aufweist.

9. System nach einem der vorhergehenden Ansprüche, ferner aufweisend ein Modul zum automatischen Ablesen eines Nummernschildes des Fahrzeugs und/oder zum Bestimmen des Fahrzeugtyps und/oder der Farbe des Fahrzeugs.

10. System nach einem der vorhergehenden Ansprüche, wobei die Verarbeitungseinheit (150) ein neuronales Netzwerk aufweist, das konfiguriert ist, um in jedem Bild jeder Ansammlung von Bildern eine oder mehrere Personen und die Koordinaten der Person oder der Personen im Bild zu detektieren.

11. Verfahren zum Bestimmen der Anzahl von Personen in einem Fahrzeug (10), wobei das Verfahren aufweist:
- einen Schritt des Erfassens, wenn das Fahrzeug in einen vorbestimmten Kontrollbereich (220) einfährt, mindestens eines ersten Bildes des Fahrzeugs (Im₁) mittels eines ersten optischen Detektors mit einer ersten optischen Achse (Δ₁) und einem ersten Sichtfeld (211) und mindestens eines zweiten Bildes des Fahrzeugs (Im₂) mittels eines zweiten optischen Detektors mit einer zweiten optischen Achse (Δ₂) und einem zweiten Sichtfeld (212), wobei die erste optische Achse und die zweite optische Achse einander schneiden und einen Winkel zwischen etwa 20° und etwa 130° einschließen, wodurch das erste Sichtfeld (211) und das zweite Sichtfeld (212) unterschiedlich sind und sich zumindest teilweise überlappen, wobei die Erfassung in mindestens einer ersten Ansammlung (S₁) von Bildern (Im₁, Im₂) des Fahrzeugs resultiert, die mit unterschiedlichen Sichtfeldern erfasst wurden; **dadurch gekennzeichnet, dass** das Verfahren ferner aufweist:
- einen Schritt des Detektierens, in dem mindestens einen ersten Bild (Im₁) und dem mindestens einen zweiten Bild (Im₂) der mindestens einen ersten Ansammlung (S₁) von Bildern, einer oder mehrerer Personen und von Koordinaten (411-414, 421-425) der Person oder der Personen in dem Bild;
- einen Schritt zur epipolargeometrischen Bestimmung der entsprechenden Koordinaten der Person in dem mindestens einen ersten Bild (Im₁) der Ansammlung von Bildern aus den Koordinaten (411 - 414) jeder der Personen, die in dem mindestens einen zweiten Bild (Im₂) der Ansammlung von Bildern detektiert wurden;
- einen Schritt zur Bestimmung der Ähnlichkeit, bei dem bestimmt wird, ob die entsprechenden Koordinaten die Koordinaten (421 - 425) einer Person sind, die in dem mindestens einen zweiten Bild detektiert wurde, um, falls dies der Fall ist, daraus zu schließen, dass es eine Ähnlichkeit zwischen der Person, die in dem mindestens einen ersten Bild (Im₁) der Ansammlung von Bildern detektiert wurde, und der Person, die in dem mindestens einen zweiten Bild (Im₂) der Ansammlung von Bildern detektiert wurde, gibt;
- einen Schritt des Bestimmens der Anzahl von Personen im Fahrzeug auf Grundlage der so bestimmten Ähnlichkeiten zwischen der/den in dem mindestens einen ersten Bild (Im₁) detektierten Person(en) und der/den in dem mindestens einen zweiten Bild (Im₂) der Ansammlung von Bildern detektierten Person(en).

12. Verfahren nach Anspruch 11, wobei:
- der Schritt des Erfassens das Erfassen einer Vielzahl von ersten Bildern (Im₁) mittels des ersten optischen Detektors und einer Vielzahl von zweiten Bildern (Im₂) mittels des zweiten optischen Detektors aufweist, wenn das Fahrzeug in den vorbestimmten Kontrollbereich (220) einfährt, wobei die Erfassung in einer Vielzahl von Ansammlungen von Bildern resultiert, die mit unterschiedlichen Sichtfeldern erfasst werden;
- der Schritt des Detektierens das Detektieren einer oder mehrerer Personen in jedem Bild jeder Ansammlung von Bildern und von Koordinaten der Person oder der Personen im Bild aufweist;
- der Schritt des Bestimmens der Ähnlichkeit das Bestimmen, für jede Ansammlung von Bildern, von Ähnlichkeiten zwischen der Person oder den Personen, die in jedem Bild der Ansammlung von Bildern erfasst wurden, aufweist;
- der Schritt des Bestimmens der Anzahl von Personen das Bestimmen einer Anzahl von Personen in dem Fahrzeug auf Grundlage der so bestimmten Ähnlichkeiten aufweist.

13. Verfahren nach einem der Ansprüche 11 oder 12, wobei die Bilder der mindestens einen Ansammlung von Bildern gleichzeitig oder nahezu gleichzeitig erfasst werden.

14. Verfahren nach einem der Ansprüche 11 bis 13, welches ferner einen Schritt zum Beleuchten des Fahrzeugs, der mit dem Schritt zum Erfassen synchronisiert ist, aufweist.

15. Verfahren nach einem der Ansprüche 11 bis 14, wobei das Fahrzeug ein fahrendes Fahrzeug ist und das Verfahren ferner das Detektieren einer Ausfahrt des Fahrzeugs aus dem Kontrollbereich und das Stoppen der Erfassung infolge der Ausfahrt des Fahrzeugs aufweist.

16. Verfahren nach einem der Ansprüche 11 bis 15, wobei das Fahrzeug ein fahrendes Fahrzeug ist und das Verfahren ferner das Detektieren der Geschwindigkeit des Fahrzeugs und das Überprüfen mindestens eines Parameters von mindestens einem der optischen Detektoren in Abhängigkeit von der gemessenen Geschwindigkeit aufweist.

## Claims

1. A system (100) for determining the number of persons in a vehicle (10), wherein said system comprises:
- at least one first optical detector (111) with a first optical axis (Δ₁) and a first angular field of view (211);
- at least one second optical detector (112) with a second optical axis (Δ₂) and a second angular field of view (212), wherein the first optical axis and the second optical axis are secant and form an angle of between approximately 20° and approximately 130°, so that the first field of view (211) and the second field of view (212) are different and at least partially overlap;
- a detection module (120) configured to trigger the acquisition of at least a first image of the vehicle (Im₁) by said first optical detector and of at least a second image of the vehicle (Im₂) by said second optical detector when the vehicle enters a predetermined control zone (220), resulting in at least a first set (S₁) of images (Im₁, Im₂) of the vehicle acquired with different fields of view; wherein the system for determining the number of persons is **characterised in that** it comprises:
- a processing unit (150) configured to:
- detect in said at least one first image (Im₁) and said at least one second image (Im₂) of said at least one first set of images, one or more persons and coordinates (411 - 414, 421 - 424) in the image of said person or persons;
- determine, by epipolar geometry, from the coordinates (411 - 414) of each of said persons detected in said at least one first image (Im₁) of the set of images, the corresponding coordinates of said person in said at least one second image (Im₂) of the set of images;
- determine whether said corresponding coordinates are the coordinates (421 - 424) of a person detected in said at least one second image (Im₂);
- in the affirmative, deduce that there is a similarity between said person detected in said at least one first image (Im₁) of the set of images and said person detected in said at least one second image (Im₂) of the set of images;
- determine, on the basis of the similarities thus determined between said person or persons detected in said at least one first image (Im₁) and said person or persons detected in said at least one second image (Im₂) of the set of images, the number of persons in the vehicle.

2. The system according to claim 1, wherein:
- said detection module (120) is configured to trigger the acquisition of a plurality of first images (Im₁) by said first optical detector and a plurality of second images (Im₂) by said second optical detector when the vehicle enters the predetermined control zone (220), resulting in a plurality of sets of images acquired with different fields of view;
- said processing unit (150) is configured to:
- detect in each image of each set of images, one or more persons and coordinates in the image of said person or persons;
- determine, for each set of images, similarities between the person or persons detected in each image of said at least one first set of images;
- determine the number of persons in the vehicle on the basis of these similarities.

3. The system according to any one of the preceding claims, wherein the images of said at least one set of images are acquired simultaneously or nearly simultaneously.

4. The system according to any one of the preceding claims, wherein said first detector and said second detector comprise different detection spectral bands.

5. The system according to any one of the preceding claims, wherein said first detector and said second detector are spaced apart by at least approximately 50 cm.

6. The system according to any one of the preceding claims, further comprising at least one source of illumination (115, 116) of the vehicle.

7. The system according to any one of the preceding claims, wherein the detection module (120) is further configured to detect an exit of the vehicle from the control zone and the stopping of the acquisition following the exit of the vehicle.

8. The system according to any one of the preceding claims, further comprising a detection module (122) for detecting the speed of the vehicle.

9. The system according to any one of the preceding claims, further comprising a module for automatically reading a number plate of the vehicle and/or determining the type of vehicle and/or the colour of the vehicle.

10. The system according to any one of the preceding claims, wherein the processing unit (150) comprises a neural network configured to detect in each image of each set of images, one or more persons and coordinates in the image of said person or persons.

11. A method for determining the number of persons in a vehicle (10), wherein said method comprises:
- a step of acquiring, when the vehicle enters a predetermined control zone (220), at least a first image of the vehicle (Im₁) by means of a first optical detector with a first optical axis (Δ₁) and a first field of view (211) and at least a second image of the vehicle (Im₂) by means of a second optical detector with a second optical axis (Δ₂) and a second field of view (212), wherein the first optical axis and the second optical axis are secant and form an angle of between approximately 20° and approximately 130°, such that the first field of view (211) and the second field of view (212) are different and at least partially overlap, the acquisition resulting in at least a first set (S₁) of images (Im₁ Im₂) of the vehicle acquired with different fields of view; **characterised in that** the method further comprises:
- a step of detecting, in said at least one first image (Im₁) and said at least one second image (Im₂) of said at least one first set (S₁) of images, one or more persons and coordinates (411 - 414, 421 - 425) in the image of said person or persons;
- a step of determining, by epipolar geometry, from the coordinates (411 - 414) of each of said persons detected in said at least one first image (Im₁) of the set of images, the corresponding coordinates of the said person in said at least one second image (Im₂) of the set of images;
- a step of determining similarity, in which it is determined whether said corresponding coordinates are the coordinates (421-425) of a person detected in said at least one second image in order to deduce, in the affirmative, that there is a similarity between said person detected in said at least one first image (Im₁) of the set of images and said person detected in said at least one second image (Im₂) of the set of images;
- a step of determining, on the basis of the similarities thus determined between said person or persons detected in said at least one first image (Im₁) and said person or persons detected in said at least one second image (Im₂) of the set of images, the number of persons in the vehicle.

12. The method according to claim 11, wherein:
- the step of acquiring comprises acquiring a plurality of first images (Im₁) by means of said first optical detector and a plurality of second images (Im₂) by means of said second optical detector, when the vehicle enters the predetermined control zone (220), wherein the acquiring results in a plurality of sets of images acquired with different fields of view;
- the step of detecting comprises detecting in each image of each set of images, one or more persons and coordinates in the image of said person or persons;
- the step of determining similarity comprises determining, for each set of images, similarities between said person or persons detected in each image of the set of images;
- the step of determining the number of persons comprises determining, on the basis of the similarities thus determined, a number of persons in the vehicle.

13. The method according to either one of claims 11 or 12, wherein the images of said at least one set of images are acquired simultaneously or nearly simultaneously.

14. The method according to any one of claims 11 to 13, further comprising a step of illuminating the vehicle, synchronised with the acquisition step.

15. The method according to any one of claims 11 to 14, wherein the vehicle is a travelling vehicle and the method further comprises detection of an exit of the vehicle from the control zone and the stopping of the acquisition following the exit of the vehicle.

16. The method according to any one of claims 11 to 15, wherein the vehicle is a travelling vehicle and the method further comprises detecting the speed of the vehicle and controlling a least one parameter of at least one of said optical detectors as a function of the measured speed.
